(19) Europäisches Patentamt
European Patent Office
Office européen des brevets

(11) **EP 4 387 221 A1**

(12) **EUROPEAN PATENT APPLICATION**

(43) Date of publication:
**19.06.2024 Bulletin 2024/25**

(21) Application number: **22213709.3**

(22) Date of filing: **15.12.2022**

(51) International Patent Classification (IPC):
**H04N 9/64** (2023.01)    **H04N 1/64** (2006.01)
**G06T 5/00** (2024.01)

(52) Cooperative Patent Classification (CPC):
**H04N 9/64; H04N 1/646;** H04N 1/407

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **TICHELAAR, Johannes Yzebrand**
**5656AG Eindhoven (NL)**

(74) Representative: **Philips Intellectual Property &
Standards
High Tech Campus 52
5656 AG Eindhoven (NL)**

(54) **IMAGE PROCESSING APPARATUS AND IMAGE PROCESSING METHOD**

(57)    An image processing apparatus (1) is provided that comprises a luminance calculation circuit (2) and a luminance mapper (3). The luminance calculation circuit (2) to calculate an input luminance (Li) from non-linear color components (R', G', B') that specify an input color and the luminance mapper (3) is configured to apply a luminance mapping function to the input luminance (Li) to obtain an output luminance (Lo). The luminance calculation circuit (2) computes relative accurate approximation of the input luminance in a computationally efficient manner.

Fig. 2

**Description**

FIELD OF THE INVENTION

The invention relates to an image processing apparatus.
The invention further relates to an image processing method.

BACKGROUND OF THE INVENTION

Until a couple of years ago, all video was encoded according to the so-called low dynamic range (LDR) paradigm, also called standard dynamic range (SDR). Nowadays video content is available with various dynamic ranges. Not all display equipment is configured to handle any dynamic range. For example older display types may only be capable to display LDR video data. Newer displays may require high dynamic range (HDR) video data. The dynamic range of a display is substantially determined by the maximum displayable luminance PL_D and to a lesser extent by the darkest displayable pixel luminance BL_D. The latter however also depends on other circumstances, such as the illumination of the viewing room.
Accordingly, there is a need for means to provide for a dynamic range conversion between the dynamic range with which the video is encoded and the dynamic range of the display.
A number of luminance mappings start from Low Dynamic Range pixels, in which the luminances are represented as luma codes (e.g. 0-1023 in 10 bit), which are defined according to the Rec. 709 LDR EOTF, which as a quite fair approximation can be said to have the shape of a square root function. In addition to the luma code Luma Y' = SQRT (Y), in which Y is the (linear, photon counting luminance, and the dash shows the non-linearity of the luma representation cos of the sqrt), also non-linear color components are defined, namely R'=sqrt( R), G'= sqrt(G) and B'= sqrt(B), in which R is the amount of red light (red photons) needed to create some color, with some hue and saturation following from the distribution of red versus green and blue, and the luminance follows from the total amount of (linear) R,G, and B. So one can add more luminance, by giving more photons distributed equally over red, green and blue components, according to some weighing scheme, which also defines the equation for calculating the luminance if one knows the R,G,B components of a color:

$$Y = \alpha_r R + \alpha_g G + \alpha_b B \qquad\qquad [\text{Eq. 1}]$$

The exact values of $\alpha_r$, $\alpha_g$ and $\alpha_b$, depend on the primaries chosen for any display, e.g., the eye will see a saturated blue somewhat darker than a less saturated blue, so it will give less contribution to the total luminance perceived, etc. A good key value for typical primaries (e.g. EBU primaries as typically co-used with the Rec. 709 video coding) is $\alpha_r$ = 0.21251; $\alpha_g$ = 0.71535; $\alpha_b$ = 0.07214.
LDR video typically comes in as the (gamma) non-linear coded color components, R', G', B', which typically are defined in a system coding their differences: Cr= K*(R'-Y'); Cb=L*(B'-Y') [K,L are normalizing constants standardized for the chosen video system] forming together the pixel color Y'CbCr, i.e. luma + two color-defining chroma components.
One defines such a luma Y' with the same equation and constants

$$Y' = \alpha_r R' + \alpha_g G' + \alpha_b B' \ldots \qquad\qquad [\text{Eq.2}]$$

Whilst this luma component may work nicely for coding (as it can be reverted to the needed R,G,B components telling the display how much colored light to show in each color subpixel on the screen, this is NOT a good measure of luminance for doing image processing.
It can be shown mathematically that, due to the gamma non-linearity, the luminance, which should be constant for any common multiplier of amount of photons in the three components (e.g. R*m, B* m >> R'* sqrt(m), etc.), the luminance when squaring the luma coding of the luminance, is not constant, as it should for RGB distributions which re-distribute photons over the components (e.g. more saturated blue taken from less red and green) in exactly such a manner that for all such different color balances Eq. 1 -i.e. the exact luminance equation- gives the same output. Rather, the luma will vary for different proportioning of the R,G,B components, and typically go down if we make a more saturated combination, i.e. which moves away from achromatic grey R=G=B towards e.g. much red, and little G and B (leak of luminance in the color components).
So, if we want to do a processing of LUMINANCE (correctly) everywhere in the color gamut of realizable colors ( 0<=R<=1; 0<=G<=1; 0<=B<=1), we must always accurately calculate the luminance, for each pixel, and that can be costly (especially if many bits are needed, because we want to transform a highly accurate LDR pixel color which is to become a HDR color on a much larger luminance range, i.e. less error tolerant to the human eye). Examples - non-limiting- of such apparatuses are decoders which decode an LDR image, which is actually a proxy of an original master HDR image.

I.e. the encoder has encoded the M_HDR image as an LDR image, directly suitable for display without further color optimization on older LDR displays: Y_LDR= F(Y_M_HDR), with F being some function elected by the encoder to gives a good coding and visual result as an LDR image corresponding to the M_HDR image. And decoders connected to a HDR display must then invert that function, to re-obtain the HDR pixel luminances: Y_M_HDR=F-1(Y_LDR); but then apart from the decoder receiving or knowing the appropriate function F_L, also the LDR luminances should be of high precision to avoid mathematically introduced errors like visual banding in the displayed image. It should however also be avoided that decoding involves undue computational efforts. This also applies to other applications wherein a conversion is required from a dynamic range of the available video and the dynamic range of the display with which it is to be reproduced.

## SUMMARY OF THE INVENTION

It is a first object of the present invention to provide an image processing apparatus that is capable to provide a reasonably accurate approximation of the mathematically correct luminance corresponding to an input color with a modest
computational effort.

In accordance with the first object we teach an improved image processing apparatus (1) to obtain an output luminance (Lo) from non-linear color components (R', G', B') that specify an input color, the image processing apparatus comprising:

    a luminance calculation circuit (2) and
    a luminance mapper (3) or luma mapper,
    the luminance calculation circuit (2) configured to compute an output value as a function P of a first input value and
    a second input value at respective inputs,

which function:

    selects one of said first input value and said second input value that is greater than or equal to the other one of said first input value and said second input value as a primary value;
    selects the other one of said first input value and said second input value as a secondary value;
    computes the output value as a linear weighting of the primary value and the secondary value if the primary value is less than a product of the secondary value with a constant, and determines the primary value as the output value otherwise,
    the luminance calculation circuit (2) being configured to:

    apply the function P to compute a first intermediary output value (V1) with a first one (R") and a second one (B") of a set of intermediate color components (R", G",B") at its respective inputs; and
    subsequently apply the function P to compute a second intermediate value (V2) with the first intermediate output value (V1) and a third one (G") of the set of intermediary color components at its respective inputs, and
    the image processing apparatus being configured to obtain an input luminance (Li) as a power of the second intermediate value (V2), and the luminance mapper (3) being configured to apply a luminance mapping function to the input luminance (Li) to obtain an output luminance (Lo) or a luma mapper being configured to apply a luma function to the second intermediate value. The luminance calculation circuit is configured to calculate an input luminance from non-linear color components that specify an input color of a pixel of an input image. The luminance mapper is an electronic circuit which is configured to apply a luminance mapping function to the input luminance to obtain an output luminance. Alternatively, the luminance mapping can be performed by a luma mapping circuit, which performs the same luminance change but in the luma domain (but in contradistinction with classical luma mapping preferably in a constant luminance luma domain as output of our luma calculation circuit embodiments).

A substantial reduction in computational effort while avoiding a substantial loss in accuracy is achieved in that the luminance calculation circuit in computing the input luminance uses a function P which is defined as follows.

The function P selects one of a first input value and a second input value that is greater than or equal to the other one of the first input value and the second input value as a primary value. In case the first input value and the second input value are equal, it does not matter which one is selected. In an embodiment the function always select the first input value or always select the second input value if neither is greater than the other to always guarantee a selection, or even arbitrarily select one of the input values.

When the primary value and the secondary value are selected, the function determines if the primary value is less than a product of the secondary value with a constant. If this condition is complied with the function computes the output value as a linear weighting of the primary value and the secondary value. Otherwise the function determines that the output value is equal to the primary value.

The luminance calculation circuit first applies the function P to compute a first intermediary output value with a first one, and a second one of a set of intermediate color components at its respective inputs.

Subsequently it applies the function P to compute a second intermediate value with the first intermediate output value and a third one of the set of intermediary color components at its respective inputs.

The luminance calculation circuit then obtains the input luminance as a power of the second intermediate value.

The intermediate color components are respective weighted values of the non-linear input color components. The weights with which the non-linear input color components are multiplied are characteristic for a primary video coding system. For the Rec. 709 video coding convention the weights are typically the square root of the values $\alpha_r$, $\alpha_g$ and $\alpha_b$ and the power with which the second intermediate value is raised to obtain the input luminance is a square power. In general, the weights are the one-over-Gamma power of the values $\alpha_r$, $\alpha_g$ and $\alpha_b$ and the power with which the second intermediate value is raised to obtain the input luminance is a power to Gamma, where Gamma is typically the Gamma specified of the Electro-optical transfer function standardized in BT.1886 (=2.4), DCI-P3 SMPTE ST 2113 (=2.6), or 2.0.

The luminance calculation circuit subsequently applies the function P to a first one, and a second one of the intermediate color components and subsequently to the first intermediate output value and a third one of the intermediary color components. The selection of the third one of the intermediate color components to be provided as input in the subsequent application of the function P also determines the selection of the remaining two of the intermediate color components to be provided as input in the first application of the function P. In principle any of the intermediate color components can be selected as the third one. Typically, however, the green color component provides a dominating contribution to the luminance. By selecting the green color component as the third intermediate color component, an approximation error is introduced in only one stage of the luminance calculation circuit. Therewith on average best results are obtained if the weighted value of the non-linear input color component for the green color component is selected as the third one of the set of intermediary color components is.

In an embodiment of the image processing apparatus, the linear weighting used for computing the first intermediary output value and/or the second intermediary output value comprises weighting the primary value with a primary weight and weighting the secondary value with a secondary weight, wherein the constant is equal to the value of the secondary weight divided by one minus the primary weight. With this relationship the actual luminance is optimally approximated for a specified primary weight and secondary weight. It is not necessary that a same embodiment of the function P is applied to the first one and the second one of the intermediate color components and to the first intermediate output value and the third one of the intermediary color components. However, it is advantageous to use the same embodiment of the function P so as to minimize hardware and/or software complexity.

In an embodiment of the image processing apparatus the primary weight is 7/8 and the secondary weight is 1/2. In this embodiment a near optimal approximation is obtained with a simple implementation of the multiplications by addition and shift operations.

In another embodiment of the image processing apparatus the primary weight is approximately 0.898 and the secondary weight is approximately 0.486. In this embodiment the mathematically correct luminance is approximated with a still higher accuracy and in a bias free manner.

The present invention also provides a dynamic range conversion apparatus to convert an input image with a first maximum luminance into an output image with a second maximum luminance different from the first maximum luminance. The dynamic range conversion apparatus provided herewith comprises an image processing apparatus as specified above to obtain an output luminance of pixels of the output image from non-linear color components of respective pixels of the input image. In one example of the dynamic range conversion apparatus provided herewith the second maximum luminance is greater than the first maximum luminance. In another example thereof the second maximum luminance is less than the first maximum luminance.

The present invention further provides a video communication system that comprises a video encoder for encoding input video data from a video source into a compressed video signal, a transmission channel for transmitting the compressed video signal to a video decoder for decoding the compressed video signal into a reconstructed video signal. The video decoder of the video communication system provided herewith comprises an image processing apparatus or a dynamic range conversion apparatus as described above.

The image processing apparatus or the dynamic range conversion apparatus comprising is particularly suitable in a video decoder of a such a video communication system wherein the color components are non-linearly encoded e.g. raised to the power of 1/y, wherein $\gamma$ is in a range of about 1.8 to about 3 e.g. about 2.4. A gamma or power value of 2.6 may also be useful. In some examples the value $\gamma$, so that the color components are effectively coded by a square root function.

In typical embodiments of the video communication system provided herewith the video encoder provides in addition to the compressed video signal metadata for transmission to the video decoder. The metadata is indicative for a video coding applied by the video encoder and the video decoder decodes the compressed video signal in accordance with the metadata. The metadata may be updated periodically or otherwise to communicate changes in applied video encoding parameters, for example to optimally adapt the applied coding to the video content. In one example the metadata is MPEG Supplemental Enhancement Information data SEI(F_ct) or a similar type of metadata for other standardized or unstandardized communication methods.

The present invention further provides an improved image processing method that comprises calculating an input luminance from non-linear color components that specify an input color and applying a luminance mapping function to the input luminance to obtain an output luminance (or a corresponding luma mapping function, to the luma which codes the luminance, and is intermediate output V2 of our method of luminance calculation). The improved method involves accurately approximating a mathematically correct input luminance value in a computationally efficient manner with a function P. The function P referred to selects one of a first input value and a second input value that is greater than or equal to the other one of said first input value and said second input value as a primary value. I.e. the primary value is equal to the maximum of the first input value and the second input value. The other one of the first input value and the second input value is selected as a secondary value. I.e. the secondary value is the minimum of the two input values. The function P further computes the output value as a linear weighting of the primary value and the secondary value if the primary value is less than a product of the secondary value with a constant, and determines the primary value as the output value otherwise. Accordingly the function P merely requires two multiplications and an addition and two comparisons. If it is determined in the second comparison that the primary value is substantially larger than the secondary value, i.e. at least equal to the product of the secondary value with a constant, then even the multiplications and the addition are avoided.

The improved method calculates the input luminance with the function P in a first and a second stage.

In the first stage it applies the function P to compute a first intermediary output value with a first one and a second one of a set of intermediate color components at its respective inputs. In the second stage it applies the function P to compute a second intermediate value with the first intermediate output value and a third one of the set of intermediary color components at its respective inputs. The intermediate color components are respective weighted values of the non-linear input color components multiplied by respective weights that are characteristic for a primary video coding system.

The improved method then obtains the input luminance as a power of the second intermediate value obtained in the second stage.

BRIEF DESCRIPTION OF THE DRAWINGS

These and other aspects of any variant of the method and apparatus according to the invention will be apparent from and elucidated with reference to the implementations and embodiments described hereinafter, and with reference to the accompanying drawings, which drawings serve merely as non-limiting specific illustrations exemplifying the more general concept, and in which dashes are used to indicate that a component is optional, non- dashed components not necessarily being essential. Dashes can also be used for indicating that elements, which are explained to be essential, are hidden in the interior of an object, or for intangible things such as e.g. selections of objects/regions, indications of value levels in charts, etc.

In the drawings:

FIG. 1 shows a video communication system;
FIG. 2 shows an image processing apparatus which may be used in the video communication system;
FIG. 3 shows a component of a first embodiment of the image processing apparatus;
FIG. 4 shows a component of a second embodiment of the image processing apparatus;
FIGs. 5A, 5B show simulation results obtained using the second embodiment;
FIGs. 6A, 6B show simulation results obtained using the first embodiment;
FIGs. 7A, 7B show simulation results obtained using the first embodiment to approximate a different function;
FIG. 8 and FIG. 9 respectively show simulation results for approximating two further different functions;
FIGs. 10A, 10B show suitable parameter values for use in the first embodiment in an application range.

DETAILED DESCRIPTION OF THE EMBODIMENTS

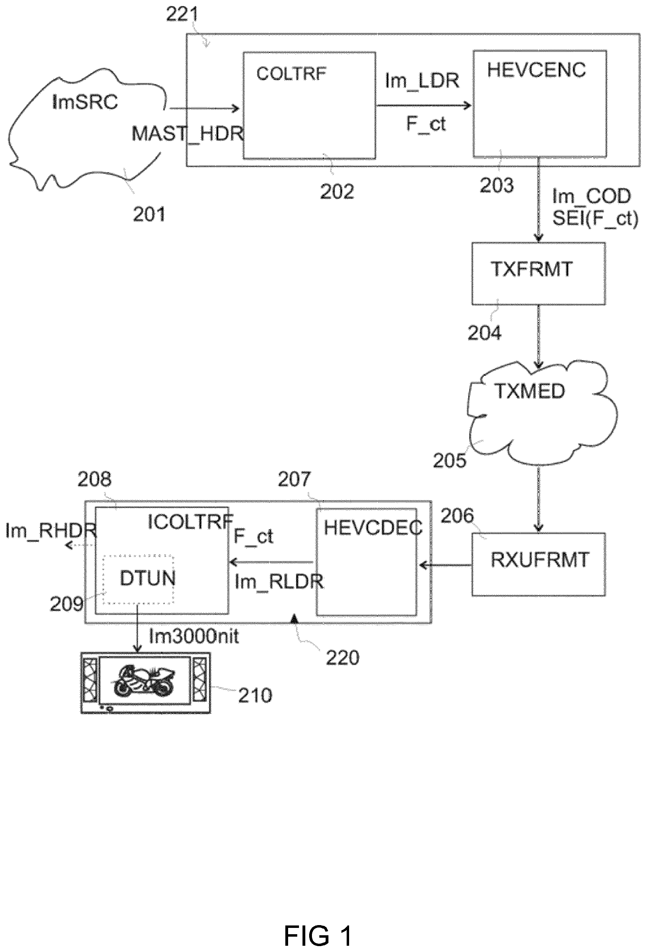

FIG. 1 schematically shows a video communication system comprising a video encoder 221, a transmission channel 204, 205, 206, and a video decoder 220.

The video encoder 221 is provided for encoding input video data MAST_HDR from a video source ImSRC into a compressed video signal Im_COD. Depending on whether one has offline created video, e.g. from an internet-delivery company, or real-life broadcast, the video source may be anything ranging from a hard disk to a cable output from e.g. a television studio, etc.

This yields the master HDR video MAST_HDR e.g. color graded by the human color grader, or a shaded version of a camera capturing, or by means of an automatic luminance re-distribution algorithm, etc. The video encoder, in this example comprising a color transformer 202 and a video compressor 203, in addition to grading a master HDR image, performs a set of often reversible color transformation functions F_ct is defined. Without intending to lose generalization, we assume this to comprise at least one luminance mapping function FL (however, there may be further functions and data, e.g. specifying how the saturation of pixels should change from the HDR to the SDR grading).

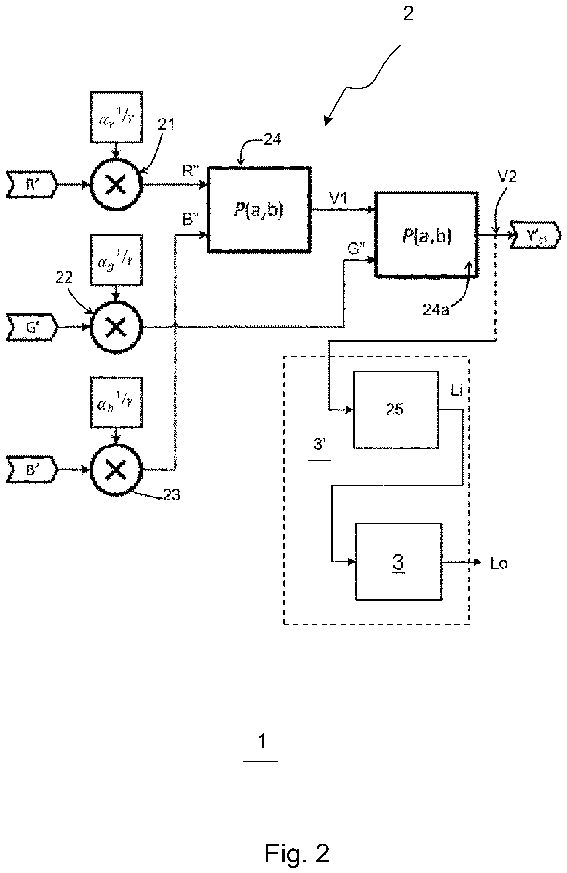

This luminance mapping function defines the mapping between different gradings, in this example the mapping from HDR to SDR reference grading (the latter in Fig. 2 being the LDR image Im_LDR to be communicated to receivers.

One should not confuse color mappings of color transformer 202 with anything that was applied to the raw camera feed to obtain the master HDR video, which is here already assumed to be input, since this color transformation is for obtaining the image to be communicated, and simultaneously the re-grading desiderata, as technically formulated in the luminance mapping function F_L (data-compressed via e.g. an MPEG or other video compression algorithm or not).

For an exemplary LDR-communicating type (i.e. LDR communication mode), the master HDR image is input to color transformer 202 which is configured to apply the F_L luminance mapping to the luminances of the master HDR image (MAST_HDR), to obtain all corresponding luminances written into output image Im_SDR. Let's assume for elucidation the shape of this function is tweaked per shot of images of a similar scene of a movie by a human color grader, by using color grading software. The applied functions F_ct (i.e. at least F_L) are written in (dynamic, handling) metadata to be co-communicated with the encoded images Im_COD. In this example the video compressor 203 is an MPEG HEVC encoder, but various alternative compression technologies would be suitable, like VVC, or AV1, and the like. In this example, the video compressor 203 forms part of video encoder 221 (which in turn may be comprised in various forms of video creation apparatuses or systems).

In the embodiment shown, the compressed image Im_COD is transmitted to at least one receiver over some image communication medium 205 (e.g. a satellite or cable or internet transmission, e.g. according to ATSC 3.0, or DVB, etc. The HDR video signal may also be communicated e.g. over a cable between two video handling apparatuses).

Typically before communication some further transformation may be done by transmission formatter 204, which may apply depending on the system such techniques as e.g. packetization, modulation, transmission protocol control, etc. This will typically apply integrated circuits.

At any receiving site, a corresponding video signal unformatter 206 applies the necessary unformatting methods to re-obtain the compressed video as a set of e.g. compressed HEVC images (i.e. HEVC image data), e.g. demodulation etc.

Video decompressor 207 does the e.g. HEVC decompression, to obtain a stream of pixelated uncompressed images Im_RLDR, which in the present example are SDR images, but in the other mode would be HDR images. The video decompressor will also unpack the necessary luminance mapping function F_L from the e.g. SEI messages, or in general color transformation functions F_ct.

The images and functions are input to a (decoder) color transformer 208 which is arranged to transform the LDR image to an image having different dynamic range. In the embodiment shown, the color transformer 208 is configured to transform the LDR image to an image having a higher dynamic range (i.e. of PL_V higher than 100 nit, and typically at least a few times higher, e.g. 5x). This results in a reconstructed HDR image Im_RHDR. E.g. a 3000 nit reconstructed HDR image Im_RHDR may be reconstructed as close approximation of the master HDR image (MAST_HDR) by applying the inverse color transformations IF_ct of the color transformations F_ct used at the encoding side to make the Im_LDR from the MAST_HDR. This image can then be sent e.g. to a display 210 for further display adaptation, but the making of a display adapted image can also happen in one go, during the decoding, by using in the color transformer an FL_DA function (determined in an offline loop, e.g. in firmware) instead of the F_L function. So the color transformer may also comprise a display adaptation unit 209, to derive the FL_DA function.

The optimized e.g. 3000 nit display adapted image Im3000nit may be sent e.g. to a display 210 if the video decoder 220 is comprised e.g. in a settopbox or computer etc., or it may be sent to a display panel in case the decoder resides in e.g. a mobile phone, or it may be communicated to a movie theatre projector if the decoder resides in e.g. some internet-connected server, etc.

FIG. 2 schematically shows an embodiment of an improved image processing apparatus 1 according to the present invention that is provided to compute an output luminance of an output image with an output dynamic range from an input color specified by non-linear color components in an input dynamic range with a modest computational effort. The computed output luminance is a reasonably accurate approximation of the actual luminance corresponding to the input color taking into account the transformation from the input dynamic range to the output dynamic range.

The improved image processing apparatus shown in FIG. 2 comprises a luminance calculation circuit 2 to calculate an input luminance Li from non-linear color components R', G', B' in the image data Im_RLDR that specify an input color and a luminance mapper 3 to apply a luminance mapping function to the input luminance Li to obtain an output luminance Lo.

The luminance calculation circuit 2 is configured to compute an output value as a function P(a,b) of a first input value (a) and a second input value (b) at respective inputs. The function P(a,b) selects one of the first input value and the second input value that is greater than or equal to the other one of said first input value and said second input value as a primary value and it selects the other one of the first input value and the second input value as a secondary value. In a special case that the first and the second input value are equal it is not relevant, which one is selected as the primary value, and which as the secondary value. In order to avoid a deadlock situation the selection can be performed as follows. Select always the first input value (a) as the primary value, unless the first input value is less than the second input value. In the latter case the second input value is selected as the primary value. Alternatively, the selection can be performed as select always the second input value (b) as the primary value, unless the second input value is less than the first input value. In the latter case the first input value is selected as the primary value. A still further alternative approach is to randomly select one of the first and the second input value as the primary value in case they are equal. In any case, the one of the input values that is not selected as the primary value is selected as the secondary value.

When it is determined which of the input values is the primary value and which is the secondary value the function P computes the output value as a linear weighting of the primary value and the secondary value if the primary value is less than a product of the secondary value with a constant, and determines the primary value as the output value otherwise.

As shown in FIG. 2, the luminance calculation circuit 2 applies the function P first to compute a first intermediary output value V1 with a first one R" and a second one B" of a set of intermediate color components R", G",B" at its respective inputs. Subsequently, it applies the function P to compute a second intermediate value V2 from the first intermediate output value V1 and a third one G" of the set of intermediary color components at its respective inputs. Which of the red, green and blue components acts as first, second or third input in our approximation doesn't matter a lot. But there is a slight preference to first combine red and blue, which have the smaller coefficients in the luma mix equation. In the example shown, the luminance calculation circuit 2 has a first and a second computation block 24, 24a to compute the first intermediary output value V1 and the second intermediary output value V2.

The luminance calculation circuit 2 may comprise a (optional) luma to luminance mapping circuit 25 with which is configured to obtain the input luminance Li as a power $\gamma$ of the second intermediate value V2. V2 is a constant luminance luma output. Usually luma does not represent luminance accurately for all colors, except on the achromatic axis of greys. Due to the non-linearity there is some reduction of the luma as calculated by applying the three weight coefficients to the non-linear (i.e. gamma or power function power(x;gamma)) coefficients, or first linearizing the three color components, then calculating the luminance in the linear domain, and then calculating the luma again on a single dimension being the luminance. The latter one is a luma coding which is an exact representation of the luminance of any color, irrespective of whether that color is saturated blue etc., and that version of the luma is called "constant luminance luma", and what we have as output V2.

The luminance mapper 3 applies a luminance mapping function to an input luminance Li to obtain an output luminance Lo. So for this a circuit will be incorporated which converts the constant luminance luma to the input luminance for the luminance mapper, which is luma to luminance mapping circuit 25. The luma to luminance mapping circuit 25 is an optional component of the luminance calculation circuit 2.

Some embodiments may want to do the luminance processing actually in the corresponding luma domain, in which case luminance mapper 3 will work in the luma domain, on inputs being the intermediate value V2, and circuit 25 will not be present.

In general the luminance processing in e.g. a dynamic range change, in e.g. a television which changes its input images to a different dynamic range, or a video coder which codes master videos as to be communicated videos of a different dynamic range, will use what we have drawn as luminance mapper circuit 3' (with or without circuit 25). Procesing in the luma domain needs less bits for the data words representing the pixel luminances (e.g. 14 bits instead of 28).

In an embodiment, the power with which the second intermediate value is raised to obtain the input luminance is a square power and the respective weights are the square roots of the respective constants of the luminance equation for the primary video coding system. This is of particular application for the Rec. 709 video coding convention.

As shown in FIG. 2, the intermediate color components R", G",B" are respective weighted values of the non-linear input color components R', G', B'. That is, the non-linear input color components R', G', B' are multiplied 21, 22, 23 by respective weights that are characteristic for a primary video coding system 221 from which the non-linear input color components R', G', B' are received.

For clarity, the various elements 21, 22, 23, 24, 24a, 25 and 3 are shown as separate computation blocks. Such an embodiment is also favorable to optimize computation speed. This is rendered possible, in that the computations can be performed in a pipelined process, wherein the luminance mapper 3 applies its luminance mapping function to the input luminance Li to obtain an output luminance Lo of a pixel k, wherein the luma to luminance mapping circuit 25 yields the input luminance Li as a power $\gamma$ of the second intermediate value V2 for a subsequent pixel k+1, wherein the second computation block 24a computes the second intermediary output value V2 for a further subsequent pixel k+2, wherein the first computation block 24 computes the first intermediary output value V1 for a further subsequent pixel k+3, and wherein the elements 21, 22, 23 perform the multiplications to weight the non-linear input color components R', G', B'.

If a very high computation speed is required, these computation blocks can be implemented as dedicated hardware. Alternatively one or more or all computation blocks can be implemented as by software executed on a programmable processor, e.g. a CPU or a GPU.

In the embodiment shown in FIG. 2, the first computation block 24 computes the first intermediary output value V1 from the intermediate color components R" and B" and subsequently, the second computation block 24a computes the second intermediate value V2 from the first intermediate output value V1 and intermediary color component G" at its respective inputs. Also another implementation is suitable, wherein the inputs for the first computation block 24 are the intermediary color components R" and G" and the second computation block 24a receives the intermediary color component B" as an input. In a still further implementation the inputs for the first computation block 24 are the intermediary color components B" and G" and the second computation block 24a receives the intermediary color component R" as an input. Nevertheless, the implementation shown in FIG 2 is relatively accurate as compared to these alternatives. This is because typically, the green color component provides a dominating contribution to the luminance. By selecting the green color component as the third intermediate color component, an approximation error is introduced in only one stage of the luminance calculation circuit.

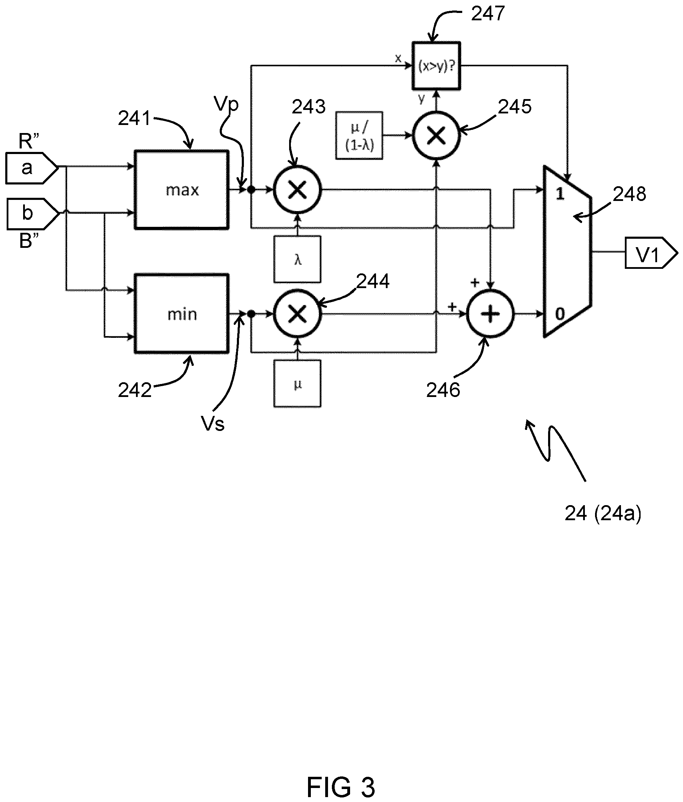

FIG. 3 shows an exemplary embodiment of a computation block to perform the function P. In this computation block 24, computation elements 241, 242 respectively output the primary value Vp and the secondary value Vs. The multiplication elements 243, 244 respectively multiply the primary value Vp with a primary weight $\lambda$ and the secondary value Vs with a secondary weight $\mu$. A summation element 246 computes the sum of the weighted primary value and the weighted secondary value. This weighted sum is provided at a first input of a multiplexer 248. The primary value Vp is provided at a second input of the multiplexer 248. The multiplexer 248 is controlled by the output of a comparator 247. The latter compares the primary value Vp with the product of the secondary value Vs and a constant. The constant is equal to the value of the secondary weight $\mu$ divided by one minus the primary weight $\lambda$. If the primary value Vp exceeds the value of the product, the multiplexer selects the primary value Vp as and otherwise it selects the weighted sum.

In the Rec. 709 video coding convention, the non-linear color components R', G', B' are the square root of the input color components R,G, B. The mathematically correct value for the input luminance Y is:

$$Y = \alpha_r R + \alpha_g G + \alpha_b B \qquad \text{[Eq. 3]}$$

Hence the square root of the luminance equals:

$$\sqrt{Y} = \sqrt{(\sqrt{\alpha_r}\sqrt{R})^2 + \left(\sqrt{\alpha_g}\sqrt{G}\right)^2 + \left(\sqrt{\alpha_b}\sqrt{B}\right)^2} \qquad \text{[Eq. 4]}$$

The inventor found that the value $\sqrt{Y}$ can approximated with modest computational effort with a two-step application of the function P specified above.

The approximation can be written as:

$$\sqrt{Y} \approx P\left(P\left(\sqrt{\alpha_r}\sqrt{R}, \sqrt{\alpha_g}\sqrt{G}\right), \sqrt{\alpha_b}\sqrt{B}\right) \qquad \text{[Eq. 5a]}$$

Or alternatively

$$\sqrt{Y} \approx P\left(P\left(\sqrt{\alpha_r}\sqrt{R}, \sqrt{\alpha_b}\sqrt{B}\right), \sqrt{\alpha_g}\sqrt{G}\right) \qquad \text{[Eq. 5b]}$$

Or

$$\sqrt{Y} \approx P\left(P\left(\sqrt{\alpha_g}\sqrt{G}, \sqrt{\alpha_b}\sqrt{B}\right), \sqrt{\alpha_r}\sqrt{R}\right) \qquad \text{[Eq. 5c]}$$

As pointed out above, Eq. 5b gives the best approximation, because of the dominant effect of the color green on the luminance.

Statistical experiments performed by the inventor further indicate that a bias free estimation of the value $\sqrt{Y}$ is obtained when the primary weight and the secondary weight used for computing the weighted sum in the execution of the function P approximately are 0.8945 and 0.4944 respectively.

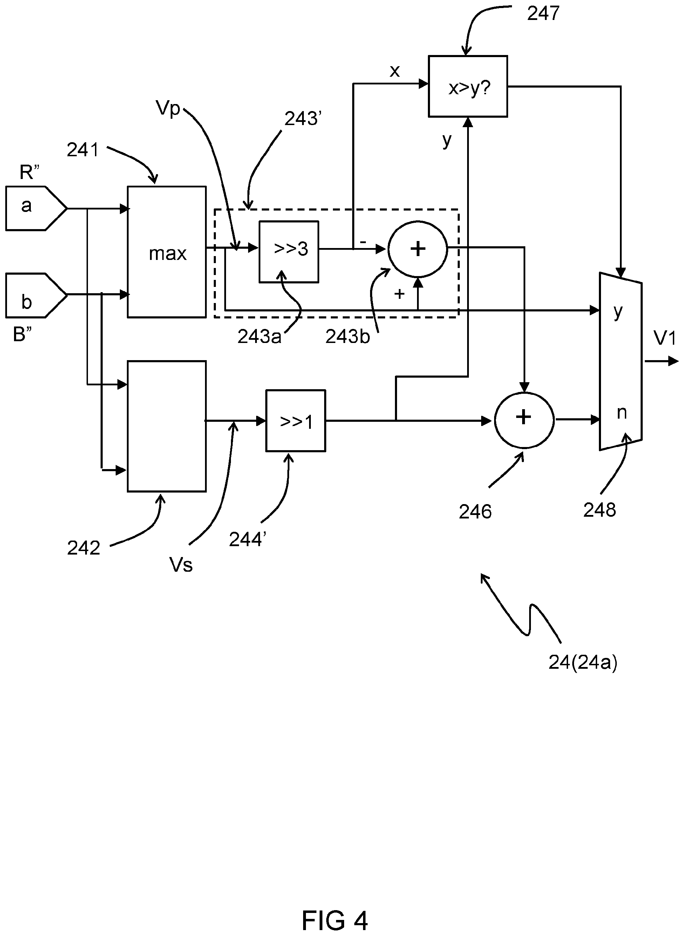

Nevertheless a still very acceptable approximation of the value $\sqrt{Y}$ is obtained if the primary weight is 7/8 and the secondary weight is 1/2. Therewith a near optimal approximation can be obtained with a simple implementation of the multiplications by addition and shift operations as illustrated in FIG. 4. Parts therein corresponding to FIG. 3 have the same reference. It can be seen in FIG. 4 that the multiplication elements 243' and 244' replace the multiplication elements 243 and 244 of FIG. 3. The multiplication element 243' performs a binary shift right by 3 operation in block 243a, which is equivalent to a division of the primary value Vp by 8, and subtracts the value so obtained from the primary value Vp in block 243b, therewith obtaining the value 7/8 Vp. The multiplication element 244' performs a binary shift right by 1 operation, therewith providing the value Vs/2. The comparator 247 compares the value x = Vp/8 with the value y = Vs/2 to determine the control signal for the multiplexer. As is apparent from FIG. 4 and its description, the computational requirements for this embodiment are very modest.

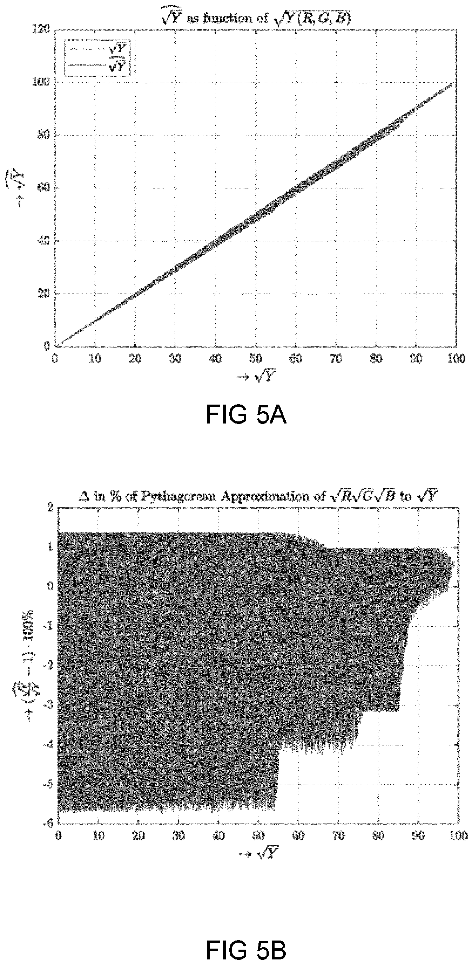

FIG. 5A compares the value $\widehat{\sqrt{Y}}$ that is estimated with the circuit 2 using an implementation of the function P with the values 7/8 and 1/2 as the primary weight and the secondary weight respectively, with the mathematically correct value $\sqrt{Y}$ for $10^7$ random samples possible values of R", G" and B".

FIG. 5B shows the relative deviation between the estimated value and the mathematically correct value.

As confirmed by FIG. 5A, 5B, the estimated value reasonably well approximates the mathematically correct value, although a small bias can be seen particularly for intermediate values of $\sqrt{Y}$.

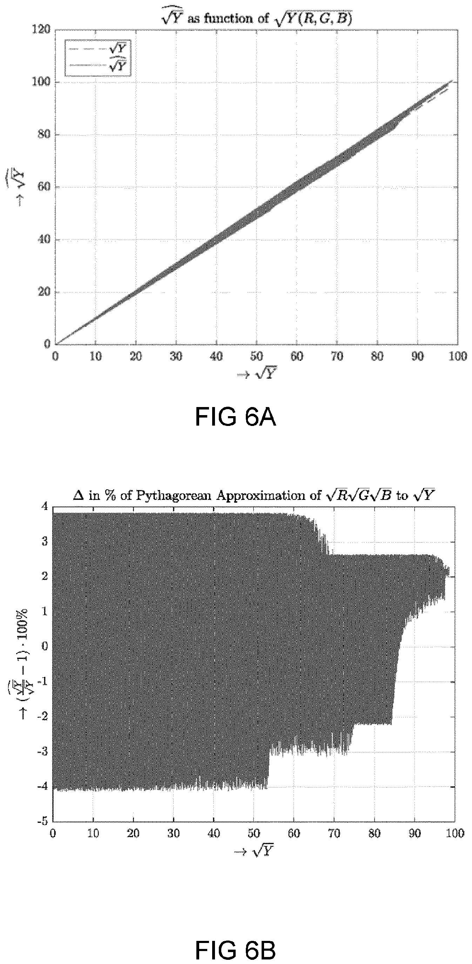

FIG. 6A compares the value $\widehat{\sqrt{Y}}$ that is estimated with the circuit 2 using another implementation of the function P. In this implementation the primary weight $\lambda$ and the secondary weight $\mu$ are chosen as follows:

$\lambda = 0.89457$

$\mu = 0.4944$

As is visible from FIG. 6A, 6B the estimation in this case is bias free and with a maximum relative error of about 4%.

Whereas the invention was explained above with respect to a special case wherein $\gamma=2$, the inventor has found that the invention is more generally applicable to non-linear encodings for any $\gamma$ in a broad range (e.g. gamma values between 2 and 3 are useful for image coding), by a proper selection of the primary weight and the secondary weight as shown in the table below for exemplary values of Gamma.

| Gamma | Lambda | mu |
|---|---|---|
| 1.8000 | 0.9180 | 0.5180 |
| 1.9000 | 0.9048 | 0.5048 |
| 2.0000 | 0.8945 | 0.4944 |
| 2.1000 | 0.8850 | 0.4850 |
| 2.2000 | 0.8763 | 0.4763 |
| 2.3000 | 0.8683 | 0.4683 |
| 2.4000 | 0.8610 | 0.4610 |
| 2.5000 | 0.8543 | 0.4543 |
| 2.6000 | 0.8481 | 0.4481 |
| 2.7000 | 0.8423 | 0.4423 |
| 2.8000 | 0.8369 | 0.4369 |
| 2.9000 | 0.8319 | 0.4319 |
| 3.0000 | 0.8273 | 0.4273 |

With this selection of the primary weight and the secondary weight as a function of gamma, the mathematically correct luma $\left(Y^{1/\gamma}\right)$ can be estimated bias free with an accuracy of about $\pm$ 4%.

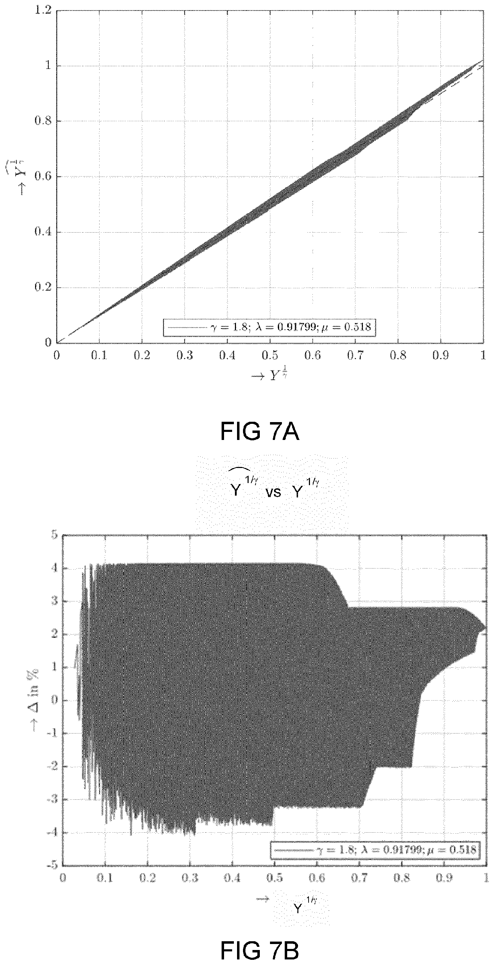

By way of example, this is illustrated in FIG. 7A, 7B for $\gamma$= 1.8000 using the approximation with $\lambda$= 0.9180 and $\mu$= 0.5180.

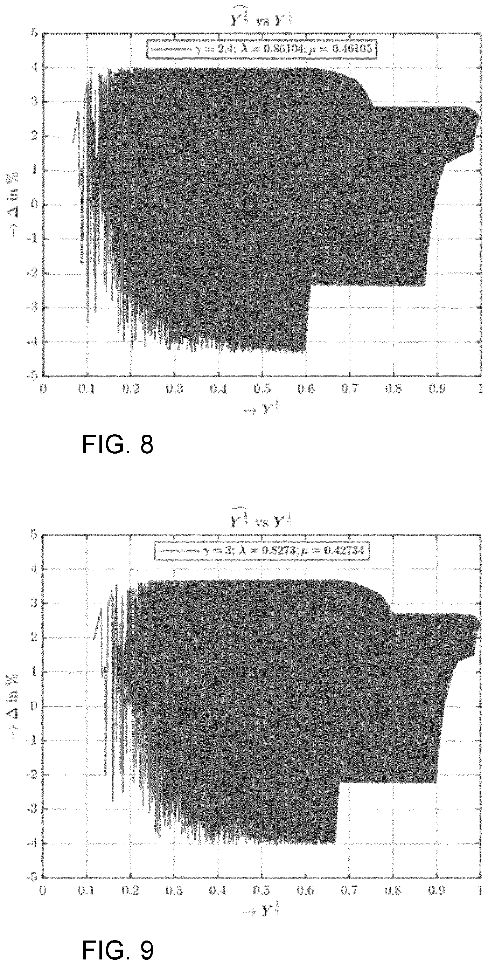

FIG. 8 and FIG. 9 respectively illustrate the accuracy of the approximation for y=2.4 with $\lambda$=0.8610 and $\mu$= 0.4610 and for $\gamma$=3.0000 with the values $\lambda$=0.8273 and $\mu$=0.4273.

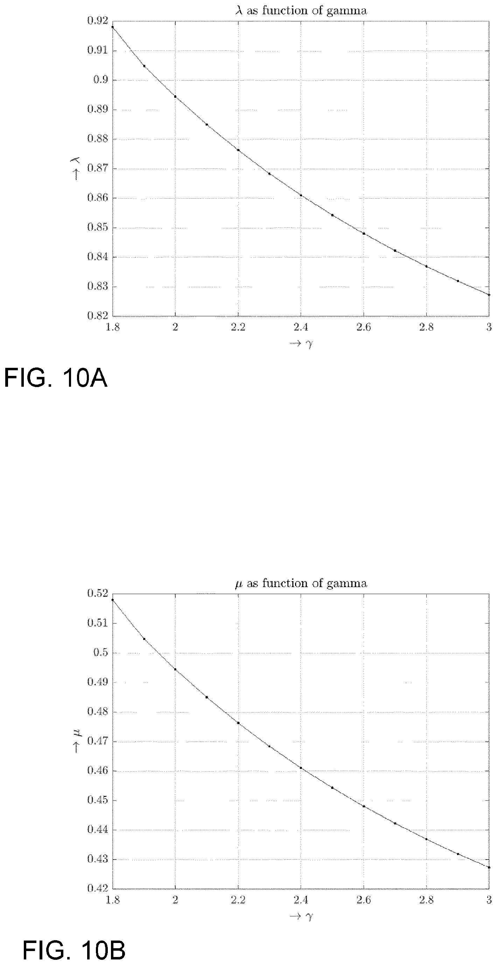

Suitable values of the primary weights and the secondary weights that are not explicitly displayed in the table above can be found by interpolation, as illustrated in FIG. 10A, 10B. Therein FIG. 10A and 10B respectively show the value for the primary weight $\lambda$ and the value for the secondary weight $\mu$ to be selected as a function of gamma.

The algorithmic components disclosed in this text may (entirely or in part) be realized in practice as hardware (e.g. parts of an application specific IC) or as software running on a special digital signal processor, or a generic processor, etc. They may be semi-automatic in a sense that at least some user input may be/have been (e.g. in factory, or consumer input, or other human input) present.

It should be understandable to the skilled person from our presentation which components may be optional improvements and can be realized in combination with other components, and how (optional) steps of methods correspond to respective means of apparatuses, and vice versa. The fact that some components are disclosed in the invention in a certain relationship (e.g. in a single figure in a certain configuration) doesn't mean that other configurations are not possible as embodiments under the same inventive thinking as disclosed for patenting herein. Also, the fact that for pragmatic reasons only a limited spectrum of examples has been described, doesn't mean that other variants cannot fall under the scope of the claims. In fact, the components of the invention can be embodied in different variants along any use chain, e.g. all variants of a creation side like an encoder may be similar as or correspond to corresponding apparatuses at a consumption side of a decomposed system, e.g. a decoder and vice versa. Several components of the embodiments may be encoded as specific signal data in a signal for transmission, or further use such as coordination, in any transmission technology between encoder and decoder, etc. The word "apparatus" in this application is used in its broadest sense, namely a group of means allowing the realization of a particular objective, and can hence e.g. be (a small part of) an IC, or a dedicated appliance (such as an appliance with a display), or part of a networked system, etc. "Arrangement" or "system" is also intended to be used in the broadest sense, so it may comprise inter alia a single physical, purchasable apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, to execute any of the characteristic functions of an invention. In particular, the computer program product may be realized as data on a carrier such as e.g. a disk or tape, data present in a memory, data traveling via a network connection -wired or wireless-, or program code on paper. Apart from program code, characteristic data required for the program may also be embodied as a computer program product. Such data may be (partially) supplied in any way.

The invention or any data usable according to any approach of the present embodiments like video data, may also be embodied as signals on data carriers, which may be removable memories like optical disks, flash memories, removable hard disks, portable devices writeable via wireless means, etc.

Some of the steps required for the operation of any presented method may be already present in the functionality of the processor or any apparatus embodiments of the invention instead of described in the computer program product or any unit, apparatus or method described herein (with specifics of the invention embodiments), such as data input and output steps, well-known typically incorporated processing steps such as standard display driving, etc. It should be noted that the above-mentioned embodiments illustrate rather than limit the invention. Where the skilled person can easily realize a mapping of the presented examples to other regions of the claims, we have for conciseness not mentioned all these options in-depth. Apart from combinations of elements of the invention as combined in the claims, other combinations of the elements are possible. Any combination of elements can be realized in a single dedicated element.

Any reference sign between parentheses in the claim is not intended for limiting the claim, nor is any particular symbol in the drawings. The word "comprising" does not exclude the presence of elements or aspects not listed in a claim. The word "a" or "an" preceding an element does not exclude the presence of a plurality of such elements.

**Claims**

1. Image processing apparatus (1) to obtain an output luminance (Lo) from non-linear color components (R', G', B') that specify an input color, the image processing apparatus comprising:

a luminance calculation circuit (2) and
a luminance mapper (3)or luma mapper ,
the luminance calculation circuit (2) configured to compute an output value as a function P of a first input value and a second input value at respective inputs,
which function:

selects one of said first input value and said second input value that is greater than or equal to the other one of said first input value and said second input value as a primary value;
selects the other one of said first input value and said second input value as a secondary value;
computes the output value as a linear weighting of the primary value and the secondary value if the primary value is less than a product of the secondary value with a constant, and determines the primary value as the output value otherwise,

the luminance calculation circuit (2) being configured to:

apply the function P to compute a first intermediary output value (V1) with a first one (R") and a second one (B") of a set of intermediate color components (R", G",B") at its respective inputs; and
subsequently apply the function P to compute a second intermediate value (V2) with the first intermediate output value (V1) and a third one (G") of the set of intermediary color components at its respective inputs, and

the image processing apparatus being configured to obtain an input luminance (Li) as a power of the second intermediate value (V2), and the luminance mapper (3) being configured to apply a luminance mapping function to the input luminance (Li) to obtain an output luminance (Lo) or a luma mapper being configured to apply a luma function to the second intermediate value,
the intermediate color components (R", G",B") being respective weighted values of the non-linear input color components (R', G', B') multiplied by respective weights that are characteristic for a primary video coding system.

2. The image processing apparatus according to claim 1, wherein the power with which the second intermediate value is raised to obtain the input luminance is a square power and wherein the respective weights are the square roots of the respective constants ($\alpha_r$, $\alpha_g$, $\alpha_b$) of the luminance equation for the primary video coding system.

3. Image processing apparatus (1) according to claim 1 or 2, wherein the third one (G") of the set of intermediary color components is the weighted value of the non-linear input color component for the green color component.

4. The image processing apparatus according to claim 1,2 or 3, wherein the linear weighting used for computing the first intermediary output value (V1) and/or the second intermediary output value (V2) comprises weighting the primary value with a primary weight and weighting the secondary value with a secondary weight, wherein the constant is equal to the value of the secondary weight divided by one minus the primary weight.

5. The image processing apparatus according to claim 4, wherein the primary weight is 7/8 and the secondary weight is 1/2.

6. The image processing apparatus according to claim 4, wherein the primary weight is approximately 0.8945 and the secondary weight is approximately 0.4944.

7. A dynamic range conversion apparatus to convert an input image with a first maximum luminance into an output image with a second maximum luminance different from the first maximum luminance, the dynamic range conversion apparatus comprising an image processing apparatus according to any of claims 1 to 6, to obtain an output luminance (Lo) of pixels of the output image from non-linear color components (R', G', B') of respective pixels of the input image.

8. The dynamic range conversion apparatus according to claim 7, wherein the second maximum luminance is greater than the first maximum luminance.

9. The dynamic range conversion apparatus according to claim 7, wherein the second maximum luminance is less than the first maximum luminance.

10. A video communication system comprising a video encoder (221) for encoding input video data (MAST_HDR) from a video source (ImSRC) into a compressed video signal (Im_COD), a transmission channel (204, 205, 206) for transmitting the compressed video signal to a video decoder (220) for decoding the compressed video signal into a reconstructed video signal (Im_RHDR), wherein the video decoder (220) comprises an image processing apparatus as claimed in any of claim 1-6 or a dynamic range conversion apparatus as claimed in any of claims 7-9.

11. The video communication system according to claim 10, wherein the video decoder (220) further comprises a display adaptation unit (209) for rendering a display adapted image signal from the reconstructed video signal.

12. The video communication system according to claim 10 or 11, wherein the video encoder (221) provides in addition to the compressed video signal (Im_COD) metadata (SEI(F_ct)) for transmission to the video decoder (220), which metadata is indicative for a video coding (F_ct) applied by the video encoder (221) and wherein the video decoder (220) decodes the compressed video signal in accordance with the metadata.

13. Image processing method comprising:

calculating an input luminance from non-linear color components (R', G', B') that specify an input color; and
applying a luminance mapping function to the input luminance to obtain an output luminance, or a corresponding luma mapping function to a luma coding of the input luminance,
calculating the input luminance comprising:

computing an output value as a function P of a first input value and a second input value at respective inputs, which function:

selects one of said first input value and said second input value that is greater than or equal to the other one of said first input value and said second input value as a primary value;
selects the other one of said first input value and said second input value as a secondary value,
computes the output value as a linear weighting of the primary value and the secondary value if the primary value is less than a product of the secondary value with a constant, and determines the primary value as the output value otherwise,

calculating the input luminance comprising:

applying the function P to compute a first intermediary output value (V1) with a first one (R") and a second one (B") of a set of intermediate color components (R", G",B") at its respective inputs; and
subsequently applying the function P to compute a second intermediate value (V2) with the first intermediate output value (V1) and a third one (G") of the set of intermediary color components at its respective inputs, and

calculating the input luminance further comprising obtaining the input luminance (Li) as a power of the second intermediate value (V2),
the intermediate color components (R", G",B") being respective weighted values of the non-linear input color components (R', G', B') multiplied by respective weights that are characteristic for a primary video coding system.

14. The method according to claim 13, wherein the non-linear color components (R', G', B') are obtained from an input image with a first maximum luminance and the output luminance (Lo) is provided for an output image with a second maximum luminance different from the first maximum luminance.

15. A video communication method comprising:

receiving input video data (MAST_HDR) from a video source (ImSRC);
encoding the input video data into a compressed video signal (Im_COD);
transmitting the compressed video signal;
receiving the compressed video signal;
decoding the compressed video signal into a reconstructed video signal, said decoding comprising obtaining non-linear color components (R', G', B') from an input image represented by the compressed video signal and providing with the method of claim 13 an output luminance (Lo) for an output image, wherein the input image has a first maximum luminance and the output image has a second maximum luminance different from the first maximum luminance.

FIG 1

Fig. 2

FIG 3

FIG 4

$\widehat{\sqrt{Y}}$ as function of $\sqrt{Y(R,G,B)}$

FIG 5A

$\Delta$ in % of Pythagorean Approximation of $\sqrt{R}\sqrt{G}\sqrt{B}$ to $\sqrt{Y}$

FIG 5B

FIG 6A

FIG 6B

FIG 7A

FIG 7B

FIG. 8

FIG. 9

FIG. 10A

FIG. 10B

Europäisches
Patentamt

European
Patent Office

Office européen
des brevets

# EUROPEAN SEARCH REPORT

Application Number

EP 22 21 3709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/272497 A1 (TICHELAAR JOHANNES YZEBRAND [NL] ET AL) 2 September 2021 (2021-09-02) * paragraph [0081]; figure 4 * ----- | 1-15 | INV. H04N9/64 H04N1/64 G06T5/00 |
| A | US 2019/082186 A1 (VAN DER VLEUTEN RENATUS JOSEPHUS [NL]) 14 March 2019 (2019-03-14) * paragraph [0148] – paragraph [0149]; figures 2, 10 * ----- | 1-15 | |
| | | | TECHNICAL FIELDS SEARCHED (IPC) |
| | | | H04N G06T |

The present search report has been drawn up for all claims

| Place of search | Date of completion of the search | Examiner |
|---|---|---|
| Munich | 15 March 2023 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 3709

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2023

| Patent document cited in search report | | Publication date | Patent family member(s) | | Publication date |
|---|---|---|---|---|---|
| US 2021272497 | A1 | 02-09-2021 | CN | 110612550 A | 24-12-2019 |
| | | | EP | 3399497 A1 | 07-11-2018 |
| | | | EP | 3619678 A1 | 11-03-2020 |
| | | | JP | 2020520145 A | 02-07-2020 |
| | | | US | 2020193890 A1 | 18-06-2020 |
| | | | US | 2021272497 A1 | 02-09-2021 |
| | | | WO | 2018202744 A1 | 08-11-2018 |
| US 2019082186 | A1 | 14-03-2019 | CN | 108605125 A | 28-09-2018 |
| | | | EP | 3409015 A1 | 05-12-2018 |
| | | | JP | 6619888 B2 | 11-12-2019 |
| | | | JP | 2019503623 A | 07-02-2019 |
| | | | US | 2019082186 A1 | 14-03-2019 |
| | | | WO | 2017129793 A1 | 03-08-2017 |

EPO FORM P0459

For more details about this annex : see Official Journal of the European Patent Office, No. 12/82